**Europäisches Patentamt**

**European Patent Office**

**Office européen des brevets**

(19)

(11) Publication number : **0 348 260 B1**

(12) # EUROPEAN PATENT SPECIFICATION

(45) Date of publication of patent specification :
24.02.93 Bulletin 93/08

(51) Int. Cl.⁵ : **G01V 5/10**

(21) Application number : **89401552.8**

(22) Date of filing : **06.06.89**

(54) **Carbon/oxygen well logging method and apparatus.**

(30) Priority : **07.06.88 US 203397**

(43) Date of publication of application :
**27.12.89 Bulletin 89/52**

(45) Publication of the grant of the patent :
**24.02.93 Bulletin 93/08**

(84) Designated Contracting States :
**DE ES FR GB GR IT NL**

(56) References cited :
**EP-A- 0 206 593**
**EP-A- 0 206 867**
**GB-A- 2 012 419**
**US-A- 3 849 646**
**US-A- 4 380 701**

(73) Proprietor : **SCHLUMBERGER LIMITED**
**277 Park Avenue**
**New York, N.Y. 10172 (US)**
(84) **DE ES GB GR IT NL**
Proprietor : **SOCIETE DE PROSPECTION**
**ELECTRIQUE SCHLUMBERGER**
**42, rue Saint-Dominique**
**F-75340 Paris Cédex 07 (FR)**
(84) **FR**

(72) Inventor : **McKeon, Donald**
**14507 River Forest**
**Houston Texas 77079 (US)**
Inventor : **Roscoe, Bradley**
**1905 Oaks**
**Pasadena Texas 77502 (US)**
Inventor : **Stoller, Christian**
**4011 Haven Pines**
**Kingwood Texas 77345 (US)**

(74) Representative : **Hagel, Francis et al**
**ETUDES ET PRODUCTIONS SCHLUMBERGER**
**Service Brevets B.P. 202**
**F-92142 Clamart Cédex (FR)**

EP 0 348 260 B1

## Description

This invention relates to nuclear well logging apparatus and methods for determining the nature of fluids in formation through which a well bore is formed. More particularly, the invention relates to determining the hydrocarbon saturation (or its correlative, water saturation) of formations adjacent a well bore by nuclear radiation logging. Still more particularly, the invention relates to inelastic gamma ray spectrum logging of a formation with correction for gamma rays from borehole fluids.

A major goal of well logging is to establish the fraction of pore space occupied by hydrocarbons. Three methods of doing so have been developed in the prior art. Electrical resistivity and thermal neutron decay methods measure the water saturation $S_w$, and the difference, $S_o = 1 - S_w$ is then the saturation of all other liquids and gases. (The term $S_o$, or "oil" saturation will be used hereafter to refer not only to liquid hydrocarbons, but also to gaseous hydrocarbons). Both the electrical resistivity and thermal neutron decay methods depend upon the presence of salts dissolved in the water and for that reason are less effective in fresh water than in salt water environments.

Because hydrocarbons contain carbon and water contains oxygen, methods and apparatus have been developed for detecting carbon and oxygen and other elements with a logging sonde. When a high energy ("fast") neutron is scattered inelastically from carbon, a 4.44 MeV gamma ray is emitted; when a neutron is scattered from oxygen, a 6.1 MeV gamma ray is emitted. Therefore, logging apparatus which counts the number of 4.4 MeV gamma rays and the number of 6.1 MeV gamma rays and determines their ratio should be under ideal conditions, a measure of the ratio of carbon to oxygen in the formation. Such measurements are known in the art as carbon/oxygen or simply, C/O measurements or C/O logs. Moreover, a calcium/silicon ratio can also be obtained. Comparison of the two ratios permits the user to distinguish carbon in calcium carbonates from that in hydrocarbons.

In cased hole wells, where the salinity or salt content of a water-saturated zone is not known, is very low, or has been altered by production by water injection, the C/O measurement is the only alternative to resistivity and neutron decay methods.

Under actual field conditions, however, the well bore may contain hydrocarbons (in the form of oil or gas) and water. Consequently, C/O measurements of the formation are contaminated or "corrupted" with gamma rays resulting from fast neutrons with carbon and oxygen atoms of fluids in the borehole. In addition, clays of certain earth formations contain carbon atoms. Such contamination of the inelastic gamma ray spectral data, and ultimately of the $S_o$ determination, may be eliminated if the porosity, lithology, borehole configuration and hydrocarbon content of the fluid in the well bore is known with precision.

Characteristics as a function of depth of a cased well, such as porosity and lithology of the formation and the borehole configuration may be known. But C/O logging has been highly sensitive to uncertainty of the borehole oil/water mixture. For this reason C/O logging measurements of cased, producing wells have required that the well be "shut-in" so that the borehole fluid components may be known better. However, even with shut-in wells, the content of borehole fluid is not always known well enough.

United Stated patent No. 4,507,554 issued March 26, 1985 to Hertzog and Nelligan describes a nuclear logging method by which a pulsed neutron source and a single detector comprising a scintillation crystal and a photomultiplier tube are used to detect spectra of signals resulting from a neutron pulse. An inelastic spectrum, an early capture spectrum and a later capture spectrum are measured. The early capture and late capture spectra are compared to derive a representation of the spectral composition of the borehole contents. The inelastic spectra having gamma ray counts of borehole and formation fluids and matrix, is corrected using the desired spectrum of the borehole contents.

United States patent No. 4,645,926 issued February 24, 1987, to Randall describes a nuclear logging system and apparatus having a pulsed neutron source and near and far detectors. Count rate data are accumulated over a plurality of discrete intervals covering the entire interval during and between bursts of the neutron source to obtain both inelastic and capture portions of the detected gamma rays. An example of the use of the inelastic portion of the spectrum is to generate parameters highly sensitive to changes of the borehole, because of the shallow depth of investigation available from the inelastic radiation. The borehole conditions most evidenced by such parameters are those related to changes in the geometry of the borehole. A ratio of total counts of near detector inelastic gamma rays is used as an indicator of changes in the borehole for diagnosing system irregularities and as an indicator of borehole effects on other parameters.

US- A-3 849 646 describes a C/O logging tod having a high energy neutron source and a single detector of in elastic gamma rays. A spectrum of in elastic gamma-rays is detected at the detector. This patent has been used to draft the preambule of claim 12.

While the technology of the patents described above represent efforts to advance the nuclear logging art, there has remained the need for a method and apparatus by which the oil saturation $S_o$ of a formation may be accurately determined through C/O logging techniques with correction for corrupting gamma rays of unknown amounts of hydrocarbons in the borehole. Consequently, several objects of the invention have been identified.

## Identification of the Objects of the Invention

A principal object of this invention is to provide near and far detectors in a C/O logging system by which carbon and oxygen determinations from spectra measured at both detectors may be combined to produce a representation of oil saturation of the formation corrected for the gamma rays produced by carbon and oxygen atoms in the borehole.

It is another object of this invention to simultaneously determine carbon and oxygen concentrations from inelastic spectra from near and far detectors in response to fast neutron pulses of a nuclear logging system.

Another object of this invention is to provide shielding structure such that the sensitivity of the near detector to borehole generated gamma rays is enhanced.

Another object of this invention is to provide shielding structure such that the sensitivity of the far detector to borehole generated gamma rays is abated while its reception of formation gamma rays is enhanced.

## SUMMARY OF THE INVENTION

The objects identified above and other advantages and features of the invention are incorporated in a method and apparatus for determining the hydrocarbon saturation of a formation traversed by a well bore in which a logging sonde adapted for translation in the well bore is equipped with a pulsed neutron source and near and far detectors. The detectors are scintillation crystal-photomultiplier assemblies. Spectral electronics are provided for producing measured inelastic spectra signals for both near and far detectors. Standard near and far spectra of postulated constituents are used to determine from the near and far inelastic spectra signals representative of carbon and oxygen as measured from each detector. The carbon and oxygen measured representations of the near detector and the carbon and oxygen representations of the far detector are combined in a predetermined borehole/formation sensitivity matrix to produce a signal representative of formation $S_o$ corrected for borehole effects.

In order to increase the sensitivity of the near detector to borehole gamma rays, shielding and orientation of the near detector in the sonde are provided for the near detector to enhance near detector reception of gamma rays emanating from the borehole. The sensitivity of the far detector to borehole gamma rays is abated with other shielding and orientation of the far detector in the sonde while simultaneously enhancing its reception of gamma rays emanating from the formation.

## BRIEF DESCRIPTION OF THE DRAWINGS

The objects, advantages and features of the invention will become more apparent by reference to the drawings which are appended hereto and wherein like numerals indicate like parts and wherein an illustrative embodiment of the invention is shown of which:

Figure 1 is a schematic illustration of a through tubing version of a well logging tool within a well bore in communication with surface instrumentation including a computer;

Figure 2 is a schematic illustration of a larger diameter through tubing version of a well logging tool according to the invention and further showing the means by which the tool may be eccentered against the well casing after the tool has reached a depth below the bottom of the tubing;

Figure 3 illustrates timing schedules for neutron bursts and counting gates which are used in the measurement of the invention;

Figure 4 is an illustration of gamma ray count spectra obtained by near and far detectors of the downhole tool;

Figure 5 is an illustration of predetermined postulated constituent spectra for near and far detectors of the downhole tool and illustrates the assumptions for combining the near and far detector yield outputs;

Figure 6 is a functional block diagram illustrating the method of the invention;

Figure 7 is a functional block diagram illustrating the control and data collection electronics for the downhole accelerator and near and far detectors;

Figure 8 illustrates a shielding arrangement by which a near detector of a small diameter tool may be made more sensitive to borehole generated gamma rays;

Figures 9A and 9B illustrate a backshielding arrangement in cross-sectional views by which a near detector for a larger diameter tool may be made more sensitive to borehole produced gamma rays;

Figures 10A and 10B illustrate an alternative backshielding arrangement in cross-sectional views by which a near detector for a larger diameter tool may be backshielded from formation gamma rays while simultaneously increasing its sensitivity to borehole gamma rays;

Figure 11 illustrates another alternative shielding arrangement in a cross-sectional view by which a near detector for a larger diameter tool may be symmetrically end shielded;

Figures 12A and 12B illustrate an alternative backshielding arrangement in cross-sectional views by which a small diameter tool may be fitted with an external sleeve for backshielding a far detector from borehole gamma rays while allowing reception of formation gamma rays; and

Figures 13A, 13B and 13C illustrate another alternative shielding arrangement in which both the near detector and far detector are backshielded in oppositely facing directions.

## DESCRIPTION OF THE INVENTION

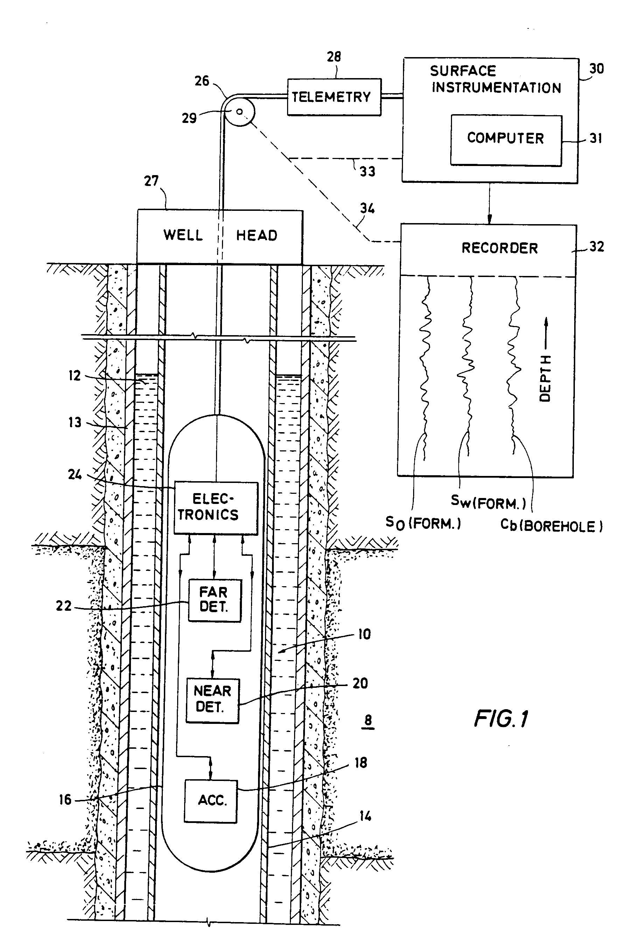

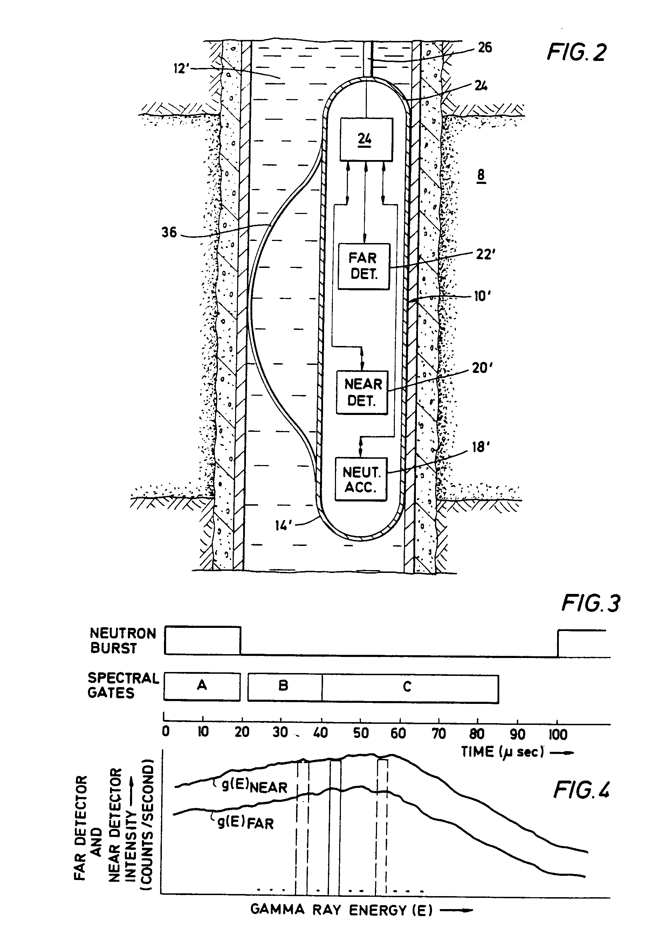

Figure 1 schematically illustrates logging sonde 10 in a well bore 12 during logging operations. The sonde 10 includes a housing 16 in the shape of a cylindrical sleeve, which, for running through small diameter production tubing, may be 1-11/16 inches in outside diameter. Although not illustrated in Figure 1, the small diameter sonde 10 may also have the eccentering device, like that shown in Figure 2, for forcing the tool against well casing beneath the bottom end of tubing 14. Accelerator or pulsed neutron source 18 is mounted in the sonde with near detector 20 and far detector 22 mounted longitudinally (axially) above accelerator 18 with increasing axial distances. Acquisition, control and telemetry electronics 24 are shown schematically and will be described in more detail below. Electronics 24 serves to control the timing of burst cycles of the neutron accelerator 18, the timing of detection time gates for near and far detectors 20, 22, and to telemeter count rate and other data via cable 26 and telemetry circuitry 28 to surface instrumentation 30 which includes computer 31. Computer 31 receives gamma ray spectral data from near and far detectors 20, 22 and processes and combines it according to the method of this invention to produce a signal representative of formation hydrocarbon (hereafter simply "oil") saturation $S_o$. The signal may be recorded as a function of depth on recorder 32 along with a signal representative of the percentage of oil in the borehole fluid, $C_b$. Water saturation $S_w$ may also be recorded.

The schematic illustration of Figure 1 shows application of the invention through tubing 14 in the well bore 12 which typically is lined with steel casing 13 and cemented (not shown) in place through formations 8. Well head 27 at the earth's surface communicates with tubing 14. Sheave wheel 29 is shown schematically as controlling the movement of sonde 10 through tubing 14. The depth of the sonde 10 within well bore 12 is measured by encoders associated with sheave 29 as indicated by dotted lines 33, 34 from sheave 29 to computer 30 and recorder 32.

Figure 2 illustrates an alternative sonde 10′ disposed in a well bore 12′ which may be an open hole but is more likely a cased hole beneath production tubing as illustrated. Sonde 10 includes an eccentering device such as bow spring 36 forcing housing 14′ against the wall of the casing or bore of the well bore. The through tubing sonde 10′, like the through tubing sonde 10 of Figure 1, has a neutron accelerator 18′ and progressively spaced apart near and far detectors 20′, 22′. The outside diameter of sonde 10′ is preferably 2-1/2 inches. The method of processing the near and far inelastic spectral data is described first and is then followed by a description of the system and apparatus provided to implement the method.

## Method for Processing Spectral Data to Determine Oil Saturation of the Formation Compensated for Oil in the Borehole.

As will be discussed in more detail concerning implementation of the apparatus of Figure 1, the accelerator is operated to provide a burst of fast neutrons periodically as illustrated in Figure 3. In the preferred embodiment of the invention, 20 μsec neutron bursts occur in a 100 μsec cycle time. Gate A, substantially coinciding with the neutron burst, is used to detect inelastic gamma rays produced by the fast neutrons, while other gates B and C indicated in Figure 3, may be used to detect gamma rays produced as the neutrons slow down to thermal energy and are captured by the nuclei of elements.

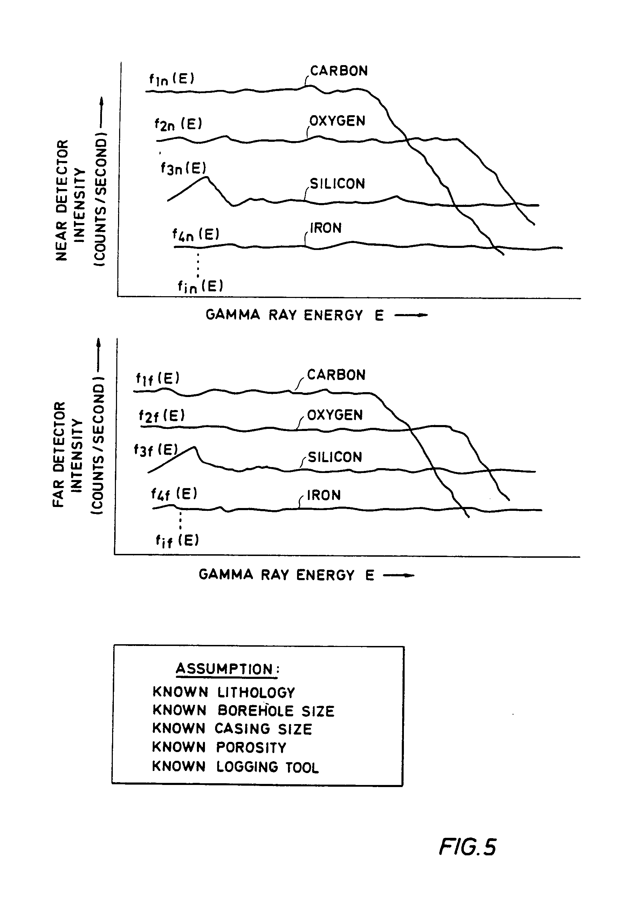

Figure 4 depicts the inelastic energy spectra of gamma ray counts as detected by near and far detectors 20 and 24 during gate A of the repetition burst-detection cycle. The inelastic energy spectra (and capture spectra from gates B and C) are obtained by accumulating the gate counts-per-channel signals from near and far detectors for a period long enough to give a statistically satisfactory spectrum, e.g., on the order of 20 seconds for the timing sequence of Figure 3. This is done under control of surface instrumentation 30 to output spectra as depicted for example in Figure 4. The surface instrumentation 30 is then recycled to zero, and new channel count data for spectra for a new depth in the well bore 12 are accumulated.

4

Two gamma ray count functions, $g(E)_{near}$ and $g(E)_{far}$ are obtained at each depth of the borehole of sonde 16 from surface instrumentation 30 after receipt of gamma ray count and pulse height information from circuitry 14. The method of the invention includes determining for each detector measured amounts of elements of the formation and borehole from a composite spectrum made up of weighted standard spectra of the constituents postulated to comprise the formation and the borehole. As described in U.S. patent 3,521,064 issued July 21, 1970 to Moran and Tittman, the weights for the standard spectra which give the best fit of the composite spectrum to the unknown spectrum represent the relative proportions of the constituents in the formation and borehole. By appropriate selection of the standards, the proportions of the constituents of interest, such as carbon, oxygen, silicon, calcium, iron, etc., can be obtained.

The 100 $\mu$sec repetition rate illustrated in Figure 3 is set high to enhance the statistical accuracy of the inelastic scattering gamma ray spectra. But closely spaced neutron bursts have the disadvantage that background gamma rays, resulting in this instance predominantly from thermal neutron capture reactions between formation constituents and neutrons from one or more preceding bursts, will be present during the detection periods for the inelastic scattering gamma rays. Such capture gamma rays will of course be sensed by the near and far detectors and unless compensated for, will tend to degrade the inelastic scattering gamma ray spectra.

The counts detected by the near detector 20 and the far detector 22 in spectral gate B of Figure 3 may be used according to the teachings of U.S. patent 4,232,220 to correct the inelastic spectra detected in gate A for capture background gamma rays. According to U.S. patent 4,232,220 issued in the name of Russel C. Hertzog and assigned to the assignee of this invention and application, background spectra for both near and far spectra may be subtracted from the inelastic spectra detected in gate A resulting in new inelastic spectra corrected for background effects. U.S. patent 4,232,220 is incorporated herein for its disclosure of correcting inelastic spectra with spectra derived from gates immediately following the neutron burst.

Alternatively, the counts detected by the near detector 20 and the far detector 22 in spectral gate C of Figure 3 may be used according to the teachings of U.S. patent 4,317,993 to correct the inelastic spectra detected in gate A for capture background gamma rays. According to U.S. patent 4,317,993 issued in the names of Russel C. Hertzog and William B. Nelligan and assigned to the assignee of this invention and application, a gate similar to that of gate C of Figure 3 is used to detect gamma ray spectra produced by thermal neutron capture from the preceding neutron burst. Such spectra are used to provide standard background spectra, one for the near detector, the other for the far detector, for use in the Moran analysis of the inelastic scattering gamma ray spectrum, as described below. Alternatively the detected capture gamma ray spectra may first be pre-analyzed, by comparison with composite spectra of constituents postulated to have contributed to the detected capture spectra, to determine which constituents have contributed significantly to the capture spectrum. The standard spectra for such significant capture gamma ray contributing constituents may then be used as standard background spectra for analysis of the inelastic scattering gamma ray spectrum.

The standard spectra illustrated by example in Figure 5 are determined in the laboratory, with an actual tool to be used under field conditions, but in a test borehole of known characteristics. Certain parameters may be varied: e.g., the lithology of the formation may be varied by making the test formation of sandstone (largely silicon dioxide) or limestone (largely calcium carbonate). The porosity of the formation may be varied as well as borehole size, casing size and weight. By testing such test boreholes under laboratory conditions, the measured standards for the near and far detectors may be developed and stored as tables in the memory of computer 31. Accordingly, computer 31 has stored in its memory a plurality of standard spectra: $f_{in}(E)$, $f_{if}(E)$ representative of near and far detectors. The "i" subscript refers to the "i"th measured standard spectra stored in memory of computer 31. The "n" subscript refers to the near detector spectra; the "f" subscript refers to the far detector spectra. Each spectra set is selected for analysis with measured count rate spectra, to match what is known about the well being logged in the field.

Using the methods of the Moran U.S. patent 3,521,064, the relative amounts of carbon and oxygen as measured from the near detector $C_n$, $O_n$ and the relative amounts of carbon and oxygen as measured from the far detector $C_f$, $O_f$ are obtained. Following the Moran method, a least squares analysis is performed to determine $C_n$, $O_n$ from $g(E)_n$ data and $f_{in}(E)$ standards. $C_f$ and $O_f$ are determined from $g(E)_f$ data and $f_{if}(E)$ standards. The analysis is performed at each logging depth of logging sonde 16 in borehole 12.

Next, the carbon and oxygen determinations of the near and far detectors are combined to determine oil saturation of the formation. This is done by assuming that the total carbon and oxygen measured as indicated above are equal to the sum of the carbon and oxygen yields from the rock matrix of the formation, the pore space fluid, and the borehole fluid:

$$C_{meas} = C_{mat} + C_{por} + C_{bh} \quad (1)$$
$$O_{meas} = O_{mat} + O_{por} + O_{bh} \quad (2)$$

The subscripts of equations (1) and (2) stand for measured, matrix, pore space, and borehole. Equations (1) and (2) may be expressed as a function of $S_o$ (oil saturation in the formation, or % of oil in the pore space) and $C_b$ (the % of oil in the borehole):

$$C_{meas} = \alpha + \beta S_o + \delta C_b \quad (3)$$

$$O_{meas} = \eta + \mu S_o + \nu C_b \quad (4)$$

The coefficients $\alpha$, $\beta$, $\delta$, $\eta$, $\mu$ and $\nu$ can be determined under laboratory conditions by taking four measurements under the same conditions except varying $S_o$ and $C_b$. For example, the conditions of a 10 inch borehole, a 7″ - 231b casing in a 33 p.u. sandstone formation may be established, and the C and O from near and far detectors measured with the logging tool to be used in the field. The table below illustrates the measurements:

| CONDITIONS: | BOREHOLE | FORMATION | MEASURE |
|---|---|---|---|
| | water | water | $C_{meas\ near}$, $O_{meas,\ near}$ $C_{meas\ far}$, $O_{meas,\ far}$ |
| | water | oil | " " |
| | oil | water | " " |
| | oil | oil | " " |

These four measurements with three unknowns are for near and far carbon and oxygen. Since the equations (3) and (4) are over determined, the coefficients $\alpha$, $\beta$, $\delta$, $\eta$, $\mu$, and $\nu$ for both the near and far measurements are solved using conventional least squares procedures.

Next, a carbon/oxygen ratio is formed for each of the near and far detectors:

$$\frac{C_{meas\ n}}{O_{meas\ n}} = COR_n = \frac{\alpha_n + \beta_v S_o + \delta_n C_b}{\eta_n + \mu_n S_o + \nu_n C_b} \quad (5)$$

$$\frac{C_{meas\ f}}{O_{meas\ n}} = COR_f = \frac{\alpha_f + \beta_n S_o + \delta_f C_b}{\eta_f + \mu_f S_o + \nu_f C_b} \quad (6)$$

After $C_{meas\ n}$, $O_{meas\ n}$, $C_{meas\ f}$, and $O_{meas\ f}$ and the $\alpha$, $\beta$, $\delta$, $\eta$, $\mu$, and $\nu$ coefficients are stored in tables in computer 31, equations (5) and (6) are used to solve for $S_o$ and $C_b$:

$$S_o = \frac{(\alpha_f - COR_f\ \eta_f)(COR_n\ \nu_n - \delta_n) + (\alpha_n - COR_n\ \eta_n)(\delta_f - COR_f\ \nu_f)}{(\beta_n - COR_n\ \mu_n)(COR_f\ \nu_f - \delta_f) + (\beta_f - COR_f\ \mu_f)(\delta_n - COR_n\ \nu_n)} \quad (7)$$

$$C_b = \frac{(\alpha_f - COR_f\ \eta_f)(COR_n\ \mu_n - \beta_n) + (\alpha_n - COR_n\ \eta_n)(\beta_f - COR_f\ \mu_f)}{(\beta_n - COR_n\ \mu_n)(COR_f\ \nu_f - \delta_f) + (\beta_f - COR_f\ \mu_f)(\delta_n - COR_n\ \nu_n)} \quad (8)$$

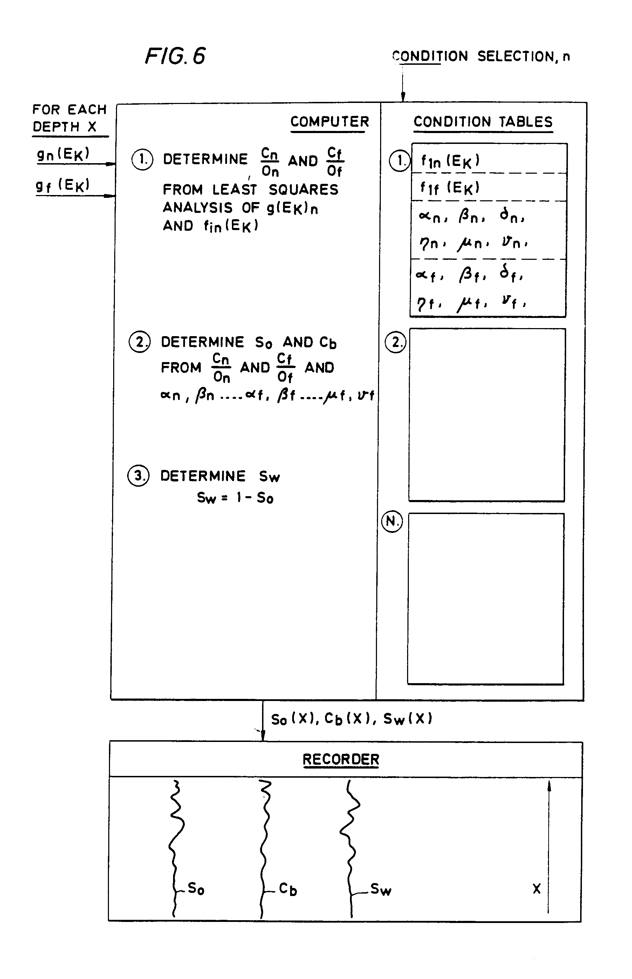

At each depth in the borehole, a signal representative of oil saturation $S_o$, and water saturation $S_w = 1 - S_o$, and percentage oil in the borehole $C_b$, is recorded on recorder 32 as illustrated in Figures 1 and 6. Figure 6 illustrates the processing steps described above where the computer 31 is input at each depth with the inelastic spectra data for near and far detectors $g_n(E_k)$, $g_f(E_k)$, where the $E_k$ represents the pulse height of energy at the kth window. The computer is input with condition selections such that one of n condition tables are selected. Each condition table includes standard spectra and $\alpha$, $\beta$, $\delta$, $\eta$, $\mu$, and $\nu$ parameters predetermined for the measurement tool with knowledge about borehole size, casing weight, formation porosity, etc. Once the condition table has been determined, the steps as described above and outlined in Figure 6 are performed to produce signals $S_o(x)$, $C_b(x)$ and $S_w(x)$.

Determination of formation and/or borehole capture decay time constant $\tau$

The apparatus of Figures 1 and 2 may be used, with a change in the repetition cycle as described above, to determine from capture gamma ray count rates of gates similar to capture gates B and C of Figure 3, the formation and borehole capture decay time constant $\tau$ and the correlative $\Sigma$. The preferred method of measuring formation $\tau$ and borehole $\tau$ is described in issued U.S. patent 4,721,853 to P. Wraight which is assigned to the assignee of this application. In other words, the apparatus of Figures 1 and 2, with programming changes of computer 31, may also be used to determine formation $\tau$ and borehole $\tau$ on a subsequent logging trip into the borehole, thereby eliminating the cost of providing a separate tool for such measurement.

6

## Block Diagram Description of downhole components and electronic circuits

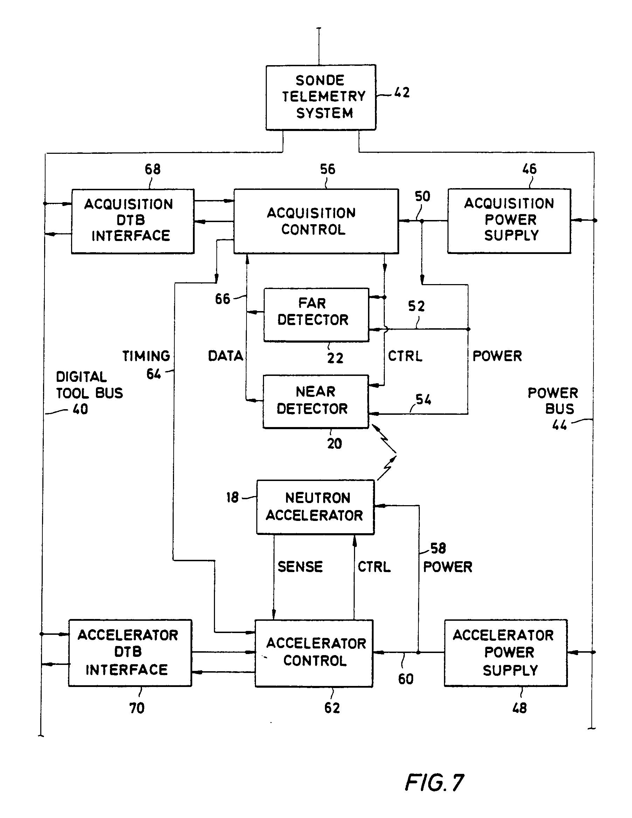

Figure 7 illustrates a block diagram of the circuits used to power and control the neutron accelerator 18, to power and control acquisition of gamma ray count data from near and far detectors 20 and 22, and to telemeter data back and forth to surface instrumentation 30 (Figure 1). A sonde telemetry system 42 provides two way digital timing control and data signals and via cable 26 to surface telemetry unit 28. Power to the sonde is also provided via cable 26 to sonde telemetry system 42. Digital tool bus 40 carries control and data signals, while power bus 44 carries electrical power to acquisition power supply 46 and to accelerator power supply 48. Busses 50, 52 and 54 provide power to acquisition control electronics 56, far detector 22 and near detector 20. Busses 58 and 60 provide power to neutron accelerator 18 and accelerator control 62. The timing of accelerator control 62 is controlled via line 64 from acquisition control 56 to accelerator control 62.

Gamma ray count data from near detector 20 and far detector 22 is applied to acquisition control electronics 56 via data bus 66. An interface circuit 68 provides two way data transmission between digital tool bus 40 and acquisition control 56. An interface circuit 70 provides two way data transmission between digital tool bus 40 and accelerator control circuit 62.

## Description of accelerator and detectors

The preferred neutron accelerator or pulsed neutron source 18 is adapted to generate discrete pulses of fast neutrons, e.g., 14 MeV, and suitably may be of the types described in more complete detail in U.S. patent No. 2,991,364 issued July 4, 1961 to C. Goodman and U.S. patent 3,456,512 issued on December 8, 1970, to A.H. Frentrop.

The near and far detectors 20 and 22 each preferably comprise an assembly of a scintillation crystal optically coupled to a photomultiplier tube. The preferred crystal for the detectors used with this invention are made of GSO, a shorthand name for the material, gadolinium orthosilicate doped with cerium. Such a crystal provides advantageous operating characteristics, including relatively high detection efficiency and energy resolution and the ability to operate in a borehole environment without special protection against contamination or temperature effects. Such crystal is described in detail in copending patent application No. 149,953 Filed February 2, 1988 for Borehole Gamma Ray Spectroscopy, by Jeffrey S. Schweitzer et al. assigned to the assignee of this application.

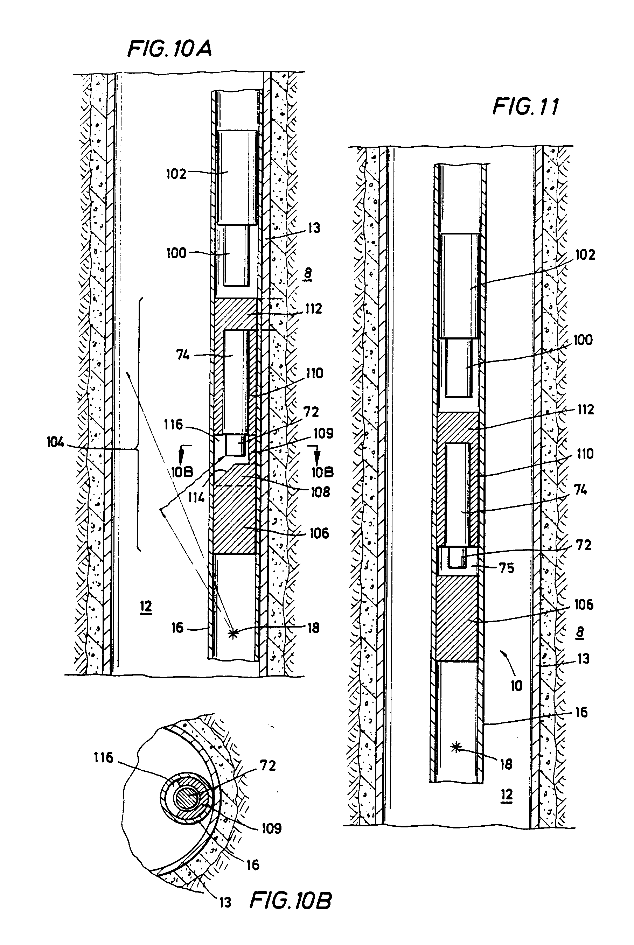

The phototube to be used with the near and far detector assemblies may be commercially available tubes sold by such companies as EMR, Inc. and RCA. The RCA 8575 phototube is preferred for the 2-1/2" configuration of the sonde 14' as illustrated in Figure 10. The EMR 741N phototube is preferred for the 1-11/16" configuration of the sonde 14.

## Description of Source-Detector Shielding Arrangements

As described above with respect to the method of the invention, it is important to correct for inelastic gamma rays emanating from the borehole when seeking a precise measurement of formation $S_o$. This is especially so when the oil-water ratio of the well bore fluids is not known with precision when a producing well is to be logged and it is important to not shut it in, or stop production.

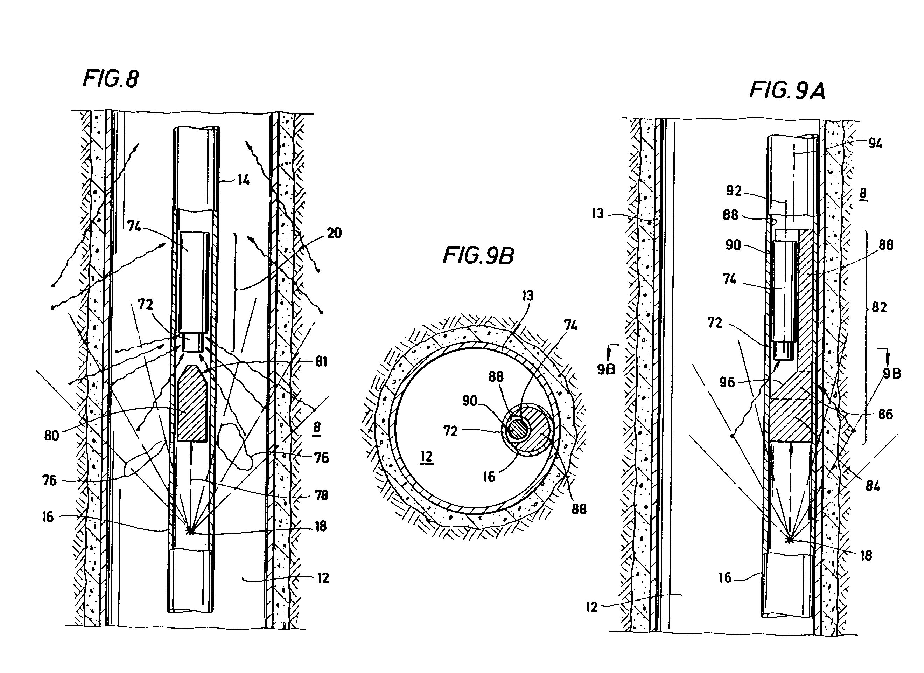

Therefore this invention, as described above, provides two detectors, both for measuring carbon-oxygen levels. The near detector, due to its proximity to the accelerator, is more sensitive to carbon generated inelastic gamma rays from hydrocarbon molecules in the borehole. Figure 8 depicts the geometry of the neutron accelerator 18 and near detector 20 including a scintillating crystal 22 and photomultiplier tube 74. Neutrons produced by accelerator 18 pass through fluids in the well bore 12 and into the formation 8. Relatively more inelastic gamma rays from carbon and oxygen atoms generated in the borehole reach the near scintillation crystal 72 due to the cylindrical geometry of the well bore and the shielding 80 placed between accelerator 18 and near crystal 72. Conversely, relatively more inelastic gamma rays from carbon and oxygen atoms generated in the formation reach the far scintillation crystal (not shown in Figure 8). These facts form the basis for the two detector method of determining formation $S_o$ and borehole $C_b$ as described above where near and far determinations of carbon and oxygen are combined to determine $S_o$ corrected for borehole carbon and oxygen atoms and $C_b$ corrected for formation carbon and oxygen atoms.

Consequently it is desirable to provide shielding geometries by which the near detector may be made more sensitive to inelastic carbon-oxygen generated gamma rays from the borehole. Figure 8 shows a single shield 80 placed between accelerator 18 and scintillation crystal 72 for making the near detector 20 relatively more sensitive for borehole carbon - oxygen inelastic gamma rays. The shield 80 of Figure 8 is especially suited for a 1-11/16" tool because there is not sufficient space for backshielding arrangements (described below) for the near detector 20 and far detector 22 given the constraints of the size of photomultiplier tubes 74. The shield of Figure 8 is a cylindrical block having a conical shape facing crystal 72. The conical shape of the end 81 of shield 80 allows relatively more borehole gamma rays to reach the crystal 72 than if the end 81 were simply flat at its top.

It is important that shield 80 be axially thick enough to prevent neutrons such as that depicted at 78 to be stopped from direct passage to crystal 72. In that regard, the shield should be placed as close as possible to the lower end of crystal 72. For example it has been found that placing the top end 81 within 3/4" of the lower end of crystal is advantageous. The diameter of the cylindrical portion of shield 80 should be as large as possible to shield as many gamma rays as possible. Advantageously, the diameter of shield should entirely fill the inside diameter of the housing sleeve 16. The axial length of shield 80 should be about seven inches to kill through tool neutrons, such as 78, before they reach the detector 20.

The 1-11/16" diameter sonde 16 of Figure 8 may be used in production tubing 14. Larger tools, for example 2-1/2" in diameter, while not applicable for use in through tubing applications, may be forced against the steel casing wall by an eccentering device such as illustrated as a bow spring 36 of Figure 2. Consequently, backshielding arrangements are advantageous to make the near detector more sensitive to borehole gamma rays and less sensitive to formation gamma rays. Figures 9A and 9B illustrate one such arrangement.

The housing sleeve 16 is forced against a wall of casing 13 of the well bore 12. The crystal 72 - phototube 74 assembly is mounted above accelerator 18 with its longitudinal axis parallel to but offset from housing sleeve longitudinal axis 94. A longitudinal edge 90 of phototube 74, which preferably has an outside diameter less than the inside diameter of the housing sleeve, is immediately adjacent an inside longitudinal edge 88 of housing sleeve 16. The remaining space between the outside of the phototube 90 and the inside of the housing sleeve 16, called the backspace, is filled with shielding material, such as hevimet. Such shielding, designated by reference numeral 88, serves to shield the phototube 74 and crystal from gamma rays from the formation 8. The backshield 88 is preferably integral with lower shield portion 84 and transition shield portion 86. The integral shield preferably constructed of hevimet material including backshield portion 88, transition portion 86, and lower shield portion 86 is designated by reference numeral 82. The lower shield portion 84 serves a similar function as the main body of shield 80 of Figure 8. It shields detector 72 and phototube 74 from direct neutrons from accelerator 18. The intermediate portion 86 has a borehole facing upwardly sloping surface 96 from lower shield portion 84 to backshield portion 88 and serves to allow a greater number of gamma rays produced in the well bore 12 to reach crystal 72. Consequently, the shield 82 serves to maximize the sensitivity of crystal 72 to gamma rays emanating from the well bore while simultaneously minimizing its sensitivity to gamma rays emanating from the formation.

Figure 10A is an alternative arrangement for backshielding the near detector comprising crystal 72 and phototube 74. The arrangement of Figure 10A, especially adapted for a 2-1/2" tool with eccentering means (not shown), has the near detector crystal 72 and phototube mounted coaxially within housing sleeve 16. The far detector including crystal 100 and phototube 102 are coaxially mounted a greater distance from accelerator 18 than is the near detector. Shield 104 includes a backshield portion 110 which substantially completely fills the space between the outside diameter of phototube 74 and the inside diameter of housing sleeve 16. A lower shield portion 106 shields crystal 72 from direct neutrons from accelerator 18. A first intermediate shield portion 108 is integral with lower shield portion 106 and has a sloping face 114 which faces the borehole 12. A second intermediate portion 109 is integral with first intermediate portion 108 and backshield portion 110. Figure 10B, a downward cross-sectional view through lines 10B-10B illustrates that it has a substantial arc of insulating material facing the wall of casing 12 and the formation 8 and has an angular notch 116 facing the borehole 12. A top cap portion 112 is disposed atop backshield portion 110.

In the arrangement of Figure 10A, the near detector is made more sensitive to gamma ray production inside the well bore 12 by virtue of the sloping face 114 and the notch 116 of their respective shield portions of shield 104 and less sensitive to formation gamma rays by virtue of backshield portions 109 and 110. The far detector crystal 100 is more sensitive to formation gamma rays because of its proximity to the wall of casing 13 and is less sensitive to well bore gamma rays by virtue of its greater distance from accelerator 18.

Figure 11 illustrates an alternative shielding arrangement similar to that of Figure 10A but includes a cylindrical gap 75 between lower shield portion 106 and backshield portion 110 and top cap portion 112. The sonde of Figure 11 would be advantageously used where the housing sleeve 16 of the sonde is centered within well bore 12.

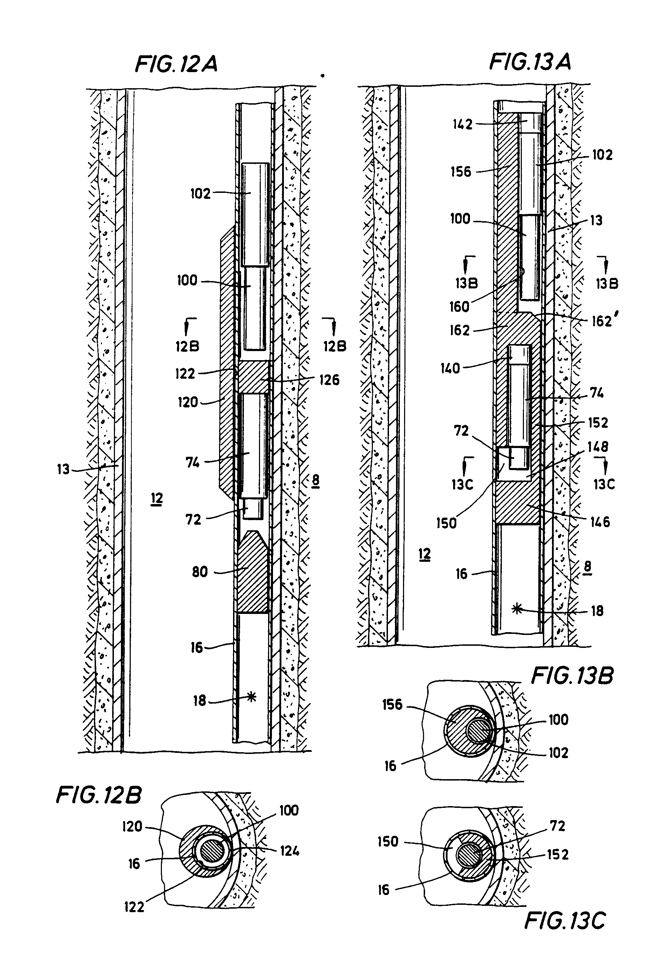

Figure 12A and 12B illustrate another backshielding arrangement by which the 1-11/16" sonde of Figure 8 may be used, not in a centered well application, but eccentered in well bore 12. A backshielding sleeve 120 is placed surrounding a longitudinal portion of housing sleeve 16 as seen more clearly in Figure 12B which is a downward cross-sectional view along lines 12B-12B of Figure 12A. Sleeve 120 is formed of a cylindrically shaped shielding material such as hevimet with a longitudinal bore 122 formed in it parallel to the longitudinal axis of the shield. The housing sleeve 16 is then placed within the bore 122 such that a longitudinal edge (the top portion of which is depicted by reference numeral 124 in Figure 12B) faces the wall of casing 13 adjacent formation 8. The longitudinal extent of sleeve 120 extends from the lower portion of near phototube 74, past far crystal 100 to a point approximately midway of upper phototube 102. A cylindrical shield 126 of hevimet is placed above phototube 74 and below far crystal 100. The backshield 120 functions to make the upper crystal less sensitive to well bore inelastic gamma rays, while shield 80, as explained above with respect to Figure 8, makes the near crystal 72 more sensitive to well bore inelastic gamma rays.

Figures 13A, 13B, and 13C illustrate an alternative shielding arrangement where both the near detector (crystal 12, phototube 74) and far detector (crystal 100, phototube 102) are backshielded. Figure 13A also shows placement of preamplifier circuits 140, 142 above near phototube 74 and far phototube 102. The backshield of the near crystal 72 and phototube 74 is similar in design to that of Figures 10A and 10B with the exception that the top part 148 of lower shield portion 146 perpendicularly faces the bottom of crystal 72. The intermediate portion 152 of the shield has a notch 150 removed from it in an arc facing the borehole 12. The intermediate portion 152 is similar in construction to backshield portion 110 of Figure 10A.

Backshield portion 156 surrounding far crystal 100 and far phototube 102 is formed from cylindrical stock of a shielding material, preferably hevimet, which has a bore 160 formed in it having an axis offset from that of housing sleeve 16 in which it is placed. The axis of bore 160 is disposed substantially 180° from the direction which notch segment 150 of shield portion 152 faces. Phototube 102 and crystal 100 are placed in bore 160 such that the crystal 100 is adjacent the well bore wall 13 and receives formation gamma rays with no shielding. On the borehole side of the far crystal 100, the shield substantially prevents borehole gamma rays from striking the crystal 100. The intermediate portion 162 of the shield below far crystal 100 has a slope 162' which slopes upwardly from bottom to top so as to further facilitate the reception of formation gamma rays to far crystal 100.

Consequently, the shielding arrangements of Figure 13A provide enhanced sensitivity of near crystal 72 to well bore inelastic gamma rays while abating its sensitivity to formation inelastic gamma rays. It also enhances the sensitivity of far crystal 100 to borehole inelastic gamma rays while abating the sensitivity to borehole inelastic gamma rays.

The steel casing 13 which lines well bore 12 may become magnetized before or during the completion of a well. The phototubes as illustrated in Figures 8-13 may be adversely effected by magnetic fields of the casing through which sonde 16 is moved. Therefore, the Fig. 13A tool may further include magnetic sheilds 164 and 168 (not shown in Figs. 13B and 13C) to protect phototube 102 and 74 from casing induced magnetic fields. Internal shields 164 and 168 are preferably fabricated of a material which has high magnetic permeability such as AD-MU-80 available from Advance Magnetics Inc. of Rochester, Indiana, U.S.A. Shields 164 and 168 are essentially metallic cylinders, closed at top and bottom ends, which surround respectively phototube 102/crystal 100 and phototube 74/crystal 72. External shield 170, preferably fabricated of a material having high magnetic saturation, such as mild steel, is placed within sonde housing 16 to envelope the internally shielded phototube 102/crystal 100 and phototube 74/crystal 72. Shield 170 is a metallic cylinder, closed at top and bottom ends. Shields 168, 164 and 170 provide magnetic isolation from the borehole environment, yet are essentially transparent to gamma rays.

In a further refinement of the present invention, the phototube and crystal of the respective near and far detectors are wrapped in a Boron shield (not shown) to reduce thermal and epithermal neutrons interactions in the crystal, and therefore reduce noise and improve signal-to-noise ratio. Preferably the shield is made of a Tef®lon ribbon impregnated with Boron and wrapped around the phototube and the crystal respectively. The wrapping for the crystal may, advantageously be impregnated with enriched Boron, ie., Boron[10]. A lead sheet or ribbon may be wrapped around the crystal of the near detector to discriminate against gamma rays with low energy threshold to further improve the signal-to-noise ratio of the detector output in the energy range of interest. For clarity of illustration, the lead sheet is not shown in the Figures.

Various improvements and modifications to the above embodiments are within the scope of the present invention, which scope is defined in the appended claims only.

## Claims

1. A method for determining the hydrocarbon saturation ($S_o$) of a formation through which a borehole passes, the method comprising the steps of:

   irradiating the formation with a pulse of fast neutrons from a source (18) in the borehole;
   detecting inelastic gamma ray spectrum signals at near and far detectors (20, 22) from said source in response to gamma rays produced during inelastic nuclear reactions between said fast neutrons and materials in and of the borehole and the formation;

generating, from said near detector (20), a first signal representative of the inelastic gamma rays emanating from the borehole and the formation;

generating, from said far detector (22), a second signal representative of the inelastic gamma rays emanating from the borehole and the formation;

comparing said first signal with a composite inelastic spectrum made up of spectra of postulated components, to produce a first estimate of the formation constituents;

comparing said second signal with a composite inelastic spectrum made up of spectra of postulated components, to produce a second estimate of the formation constituents; and

determining from said first and second estimates said characteristic of the formation.

2. The method of claim 1 comprising the further steps of:

comparing representations of said near and far inelastic gamma ray spectrum signals respectively with predetermined model representations of the borehole and the formation; and

producing a representation of said hydrocarbon saturation (So) in the formation substantially corrected for gamma rays produced by said nuclear reactions between said fast neutrons and materials in and of the borehole.

3. The method of claim 2 wherein said steps are repeated at different depths in the borehole and a signal proportional to said representation of the hydrocarbon saturation (So) in the formation is recorded as a function of borehole depth.

4. The method of claim 2 wherein a signal (Sw) proportional to 1-So is produced and recorded as a function of borehole depth.

5. The method of any one of claims 2 to 4 further comprising the step of determining a characteristic of the contents of the borehole.

6. The method of claim 5 for further determining the percentage of hydrocarbons (Cb) of materials in and of the borehole, comprising the further steps of:

comparing representations of said near and far inelastic gamma ray spectrum signals respectively with predetermined model representations of the borehole and the formation; and

producing a representation of said percentage of hydrocarbons (Cb) substantially corrected for gamma rays produced by said nuclear reactions between said fast neutrons and the formation.

7. The method of claim 5 or 6 wherein said steps are repeated at different depths in the borehole and a signal proportional to said representation of said percentage of hydrocarbons (Cb) of materials in and of the borehole is recorded as a function of borehole depth.

8. The method of claim 1 comprising the additional step of:

using the representation of the gamma ray spectrum signals to produce estimates (Cn/On) of amounts of carbon and oxygen as measured by said near detector and estimates (Cf/Of) of amounts of carbon and oxygen as measured by said far detector; and

determining a borehole corrected carbon-oxygen ratio of said formation by combining said amounts in a predetermined relationship.

9. The method of claim 8 further comprising the step of:

determining a formation corrected carbon-oxygen ratio of said borehole by combining said estimates in a predetermined relationship.

10. The method of claim 9 wherein said steps are repeated at different depths in the borehole and said borehole corrected carbon-oxygen ratio is recorded as a function of borehole depth.

11. The method of any one of claims 1 to 10 further comprising the steps of:

shielding said near detector so that it is primarily sensitive to gamma rays emanating from the borehole; and

shielding said far detector so that it is primarily sensitive to gamma rays emanating from the formation.

12. A well logging apparatus for determining the hydrocarbon saturation (So) of a formation traversed by a borehole, comprising:

an elongated housing sleeve (16);

a source (18) of fast neutrons mounted in said housing sleeve;

a near detector (20) disposed in said housing sleeve (16) longitudinally at a first distance from said source (18) for producing signals representative of gamma rays produced during inelastic nuclear reactions between said neutrons and materials around said source;

characterized by:

a far detector (22) disposed in said housing sleeve (16) longitudinally at a second distance from said source (18) greater than said first distance for producing signals representative of gamma rays produced during inelastic nuclear reactions between said neutrons and materials around said source;

means (31) responsive to said near and far detector signals for generating a signal representative of said formation characteristic; and

means (80) for enhancing the sensitivity of said near gamma ray detector (20) to gamma rays produced during said inelastic nuclear reactions between said fast neutrons and materials in and of the borehole.

13. The apparatus of claim 12 characterized in that said near detector (20) includes a scintillation crystal (72) and said enhancing means include a generally cylindrical gamma ray shield (80) placed between said source and said scintillation crystal, said shield having a frusto-conical shape (81) facing said crystal.

14. The apparatus of claim 13 characterized in that said near detector (20) is covered with a boron shield.

15. The apparatus of claim 13 or 14 characterized in that said far detector (22) is covered with a boron shield.

16. The apparatus of claim 12, characterized in that :

said near detector (20) includes a cylindrical scintillation crystal (72) and a cylindrical photomultiplier tube (74) abutting each other and having their axes aligned, said crystal being disposed between said source and said tube, and said tube having a diameter less than that of said housing sleeve (16); and

said borehole sensitivity enhancing means include:

means for mounting said crystal and tube (72, 74) with said detector axis parallel to but offset from said housing axis, such that an external longitudinal edge of said tube (74) coincides with an internal longitudinal edge of said housing sleeve (16) and a back space is provided between the outside of said tube and the inside of said housing sleeve, and

a gamma ray shield including a lower cylindrical portion (84) disposed within said housing sleeve (16) between said crystal and said source, and an upper back shield portion (88) disposed in said back space.

17. The apparatus of claim 16 characterized in that said back shield portion (88) and said lower cylindrical portion (84) are integrally connected by a connecting portion (86) having a downwardly sloping surface (96) from said back shield portion to said cylindrical portion and facing said external longitudinal edge, said surface disposed beneath said crystal.

18. The apparatus of claim 12 characterized in that :

said near detector (20) includes a cylindrical scintillation crystal (72) and a cylindrical photomultiplier tube (74) abutting each other and having their axes aligned, said crystal being disposed between said source and said tube, said tube having a diameter less than that of said housing sleeve (16);

said crystal and tube (72, 74) are mounted coaxially with said housing sleeve (16) such as to provide a space between the outside of said tube and the inside of said housing sleeve; and said borehole sensitivity enhancing means includes a gamma ray shield including:

a lower cylindrical portion (106) disposed within said housing sleeve (16) between said crystal and said source,

an upper back shield portion (110) disposed in said space,

a sleeve portion (109) connected to said back shield portion (110) and extending longitudinally to a position below said crystal (72), said sleeve portion having longitudinally extending angular opening (116) in its wall, and

a connecting portion (108) between said lower cylindrical portion (106) and said sleeve portion (109) having a downwardly sloping surface (114) from the bottom of said sleeve portion (109) to the top of said cylindrical portion (106), said surface facing in the same direction as said angular opening (116) in the wall of said sleeve portion (109), and said surface (114) disposed substantially beneath said angular opening in said sleeve portion wall and beneath said crystal (72).

19. The apparatus of claim 18 characterized in that said gamma ray shield further includes a top cap portion (112) disposed above said back shield portion (110) and above said tube (74).

20. The apparatus of claim 12 characterized in that :
said near detector (20) includes a cylindrical scintillation crystal (72) and a cylindrical photomultiplier tube (74) abutting each other and having their axes aligned, said crystal being disposed between said source and said tube;
said crystal and tube (72, 74) are mounted coaxially with said housing sleeve, said tube having a diameter less than that of said housing sleeve (16) such as to provide a space between the outside of said tube and the inside of said housing sleeve; and
said borehole sensivity enhancing means includes a gamma ray shield including:
a lower cylindrical portion (106) disposed within said housing sleeve between said crystal (72) and said source (18), and
an upper back shield portion (110) disposed in said back space, said back shield portion (110) and said lower cylindrical portion (106) being separated by a longitudinal space substantially corresponding to the longitudinal placement of said crystal (72).

21. The apparatus of claim 20 characterized by further including a cylindrical top cap portion (112) disposed above said back shield portion (110) and above said tube (74).

22. The apparatus of any one of claims 12 to 21 characterized by further comprising borehole sensitivity abating means for decreasing the sensitivity of said far gamma ray detector to gamma rays produced during said inelastic nuclear reactions between said fast neutrons and materials in and of the borehole.

23. The apparatus of claim 22 characterized in that
said near detector includes a near scintillation crystal (72) and a near photomultiplier tube (74), said far detector includes a far scintillation crystal (100) and a far photomultiplier tube (102), and
said borehole sensitivity abating means includes a first gamma ray shield (120, 156) disposed adjacent said far scintillation crystal (100) about the outside of said housing sleeve, said first shield (120, 156) extending longitudinally from a position beneath said far crystal to a position above said far crystal, said shield being transparent to gamma rays through an angular segment of the periphery of said housing sleeve (16) and being opaque of gamma rays around the remainer of the periphery of said housing sleeve.

24. The apparatus of claim 23 characterized in that said borehole sensitivity abating means further includes a second gamma ray opaque shield (126, 162) having a generally cylindrical shape with a diameter substantially the same as an internal diameter of said housing sleeve (16), said second shield (126, 162) being disposed between said near photomultiplier tube (74) and said far crystal (100).

25. The apparatus of claim 24 characterized in that said first shield (120) extends longitudinally from a position beneath said second shield (126) to a position above said far crystal (100).

26. The apparatus of any one of claims 12 to 25 characterized by further comprising means for reducing the effects of magnetic fields in said borehole on said detectors.

27. The apparatus of claim 26 characterized in that said reducing means includes a first cylinder of a high magnetic permeability material enveloping each detector.

28. The apparatus of claim 27 characterized in that said reducing means further includes a second cylinder of high magnetic saturation enveloping said first cylinder.


**Patentansprüche**

1. Ein Verfahren zum Bestimmen der Kohlenwasserstoffsättigung (So) einer von einem Bohrloch durchteuften Formation, welches Verfahren die Schritte umfaßt:
Bestrahlen der Formation mit einem Impuls schneller Neutronen aus einer im Bohrloch befindlichen Quelle (18);

Erfassen der inelastischen Gammastrahlen-Spektrumsignale bei einem der Quelle nahen und einem der Quelle fernen Detektor (20, 22) in Abhängigkeit von Gammastrahlung, erzeugt während inelastischer Kernreaktionen zwischen den schnellen Neutronen und Materialien in dem Bohrloch und der Formation bzw. des Bohrlochs und der Formation;

Erzeugen, durch den nahen Detektor (20), eines ersten Signals, repräsentativ für die inelastischen Gammastrahlen, die aus dem Bohrloch und der Formation stammen;

Erzeugen, durch den fernen Detektor (22), eines zweiten Signals, repräsentativ für die inelastischen Gammastrahlen, die aus dem Bohrloch und der Formation stammen;

Vergleichen des ersten Signals mit einem zusammengesetzten inelastischen Spektrum, aufgebaut aus Spektra von postulierten Komponenten zum Erzeugen einer ersten Abschätzung der Formationsbestandteile;

Vergleichen des zweiten Signals mit einem zusammengesetzten inelastischen Spektrum, aufgebaut aus Spektra von postulierten Komponenten zum Erzeugen einer zweiten Abschätzung der Formationsbestandteile; und

Bestimmen aus der ersten und der zweiten Abschätzung die Charakteristik der Formation.

2. Das Verfahren nach Anspruch 1, umfassend die ferneren Schritte:

Vergleichen von Repräsentationen des nahen und des fernen inelastischen Gammastrahl-Spektrumsignals mit vorbestimmten Modellrepräsentationen des Bohrlochs bzw. der Formation; und

Erzeugen einer Repräsentation der Kohlenwasserstoffsättigung (So) in der Formation, die im wesentlichen korrigiert ist bezüglich Gammastrahlen, erzeugt durch die Kernreaktionen zwischen den schnellen Neutronen und Materialien in dem Bohrloch und des Bohrlochs.

3. Das Verfahren nach Anspruch 2, bei dem die Schritte bei unterschiedlichen Tiefen in dem Bohrloch wiederholt werden, und ein Signal proportional der Repräsentation der Kohlenwasserstoffsättigung (So) in der Formation als Funktion der Bohrlochtiefe aufgezeichnet wird.

4. Das Verfahren nach Anspruch 2, bei dem ein Signal (Sw) proportional zu 1-So erzeugt und aufgezeichnet wird als Funktion der Bohrlochtiefe.

5. Das Verfahren nach einem der Ansprüche 2 bis 4, ferner umfassend den Schritt der Bestimmung einer Charakteristik des Inhalts des Bohrlochs.

6. Das Verfahren nach Anspruch 5 für weitere Bestimmung des Prozentsatzes an Kohlenwasserstoffen (Cb) von Materialien in dem Bohrloch und des Bohrlochs, umfassend die weiteren Schritte:

Vergleichen von Repräsentationen des nahen und des fernen inelastischen Gammastrahlen-Spektrumsignals mit vorbestimmten Modellrepräsentationen des Bohrlochs bzw. der Formation; und

Erzeugen einer Repräsentation des Prozentsatzes an Kohlenwasserstoffen (Cb), die im wesentlichen korrigiert ist bezüglich Gammastrahlen, erzeugt durch die Kernreaktionen zwischen den schnellen Neutronen und der Formation.

7. Das Verfahren nach Anspruch 5 oder 6, bei dem die Schritte an unterschiedlichen Bohrlochtiefen wiederholt werden, und ein Signal proportional der Repräsentation des Prozentsatzes an Kohlenwasserstoffen (Cb) von Materialien in dem Bohrloch und des Bohrlochs als Funktion der Bohrlochtiefe aufgezeichnet wird.

8. Das Verfahren nach Anspruch 1, umfassend den zusätzlichen Schritt:

Verwendung der Repräsentation der Gammastrahlen-Spektrumsignale zum Erzeugen von Abschätzungen (Cn/On) von Mengen an Kohlenstoff und Sauerstoff, wie sie gemessen werden durch den nahen Detektor, und Abschätzungen (Cf/Of) von Mengen an Kohlenstoff und Wasserstoff, wie durch den fernen Detektor gemessen; und

Bestimmen eines bohrlochkorrigierten Kohlenstoff-Sauerstoff-Verhältnisses der Formation durch Kombinieren der Mengen in einer vorbestimmten Beziehung.

9. Das Verfahren nach Anspruch 8, ferner umfassend den Schritt:

Bestimmen eines formationskorrigierten Kohlenstoff-Sauerstoff-Verhältnisses des Bohrlochs durch Kombinieren der Abschätzungen in einer vorbestimmten Beziehung.

10. Das Verfahren nach Anspruch 9, bei dem die Schritte bei unterschiedlichen Bohrlochtiefen wiederholt werden, und das bohrlochkorrigierte Kohlenstoff-Sauerstoff-Verhältnis als Funktion der Bohrlochtiefe aufgezeichnet wird.

11. Das Verfahren nach einem der Ansprüche 1 bis 10, ferner umfassend die Schritte:

Abschirmen des nahen Detektors so, daß er primär empfindlich ist bezüglich aus dem Bohrloch stammender Gammastrahlen; und

Abschirmen des fernen Detektors so, daß er primär empfindlich ist bezüglich aus der Formation stammender Gammastrahlen.

12. Eine Bohrlochlogvorrichtung zum Bestimmen der Kohlenwasserstoffsättigung (So) einer von einem Bohrloch durchteuften Formation, umfassend:

eine langgestreckte Gehäusehülse (16);

eine in der Gehäusehülse montierte Quelle (18) schneller Neutronen;

einen in der Gehäusehülse (16) in Längsrichtung in einem ersten Abstand von der Quelle (18) angeordneten nahen Detektor (20) zum Erzeugen von Signalen, die repräsentativ sind für Gammastrahlen, erzeugt während inelastischer nuklearer Reaktionen zwischen den Neutronen und Materialien rings um die Quelle;

gekennzeichnet durch

einen fernen Detektor (22), der in der Gehäusehülse (16) in Längsrichtung in einer zweiten Entfernung von der Quelle (18) angeordnet ist, die größer ist als die erste Entfernung, für das Erzeugen von Signalen, die repräsentativ sind für Gammastrahlen, erzeugt während inelastischer Kernreaktionen zwischen den Neutronen und Materialien rings um die Quelle;

Mittel (31), die auf die Signale des nahen und des fernen Detektors ansprechen zum Erzeugen eines Signals, das repräsentativ ist für die Formationscharakteristik; und

Mittel (80) für die Verbesserung der Empfindlichkeit des nahen Gammastrahlen-Detektors (20) auf Gammastrahlen, die während der inelastischen Kernreaktionen zwischen den schnellen Neutronen und Materialien in dem Bohrloch und des Bohrlochs erzeugt werden.

13. Die Vorrichtung nach Anspruch 12, dadurch gekennzeichnet, daß der nahe Detektor (20) einen Szintillationskristall (72) umfaßt, und die Verbesserungsmittel eine generell zylindrische Gammastrahlen-Abschirmung (80) umfaßt, die zwischen der Quelle und dem Szintillationskristall plaziert ist, welche Abschirmung eine dem Kristall zugekehrte Kegelstumpfform (81) aufweist.

14. Die Vorrichtung nach Anspruch 13, dadurch gekennzeichnet, daß der nahe Detektor (20) mit einer Bohrabschirmung bedeckt ist.

15. Die Vorrichtung nach Anspruch 13 oder 14, dadurch gekennzeichnet, daß der ferne Detektor (22) mit einer Bohrabschirmung bedeckt ist.

16. Die Vorrichtung nach Anspruch 12, dadurch gekennzeichnet,

daß der nahe Detektor (20) einen zylindrischen Szintillationskristall (72) und eine zylindrische Fotovervielfacherröhre (74) in Anlage aneinander umfaßt mit ihren Achsen zueinander ausgefluchtet, welcher Kristall zwischen der Quelle und der Röhre angeordnet ist, und die Röhre einen Durchmesser aufweist, der kleiner ist als der der Gehäusehülse (16), und

daß die Bohrlochempfindlichkeitsverbesserungsmittel umfassen:

Mittel für das Montieren des Kristalls und der Röhre (72, 74) mit der Detektorachse parallel zu der Gehäuseachse, jedoch dieser gegenüber versetzt derart, daß eine äußere Längskante der Röhre (74) zusammenfällt mit einer inneren Längskante der Gehäusehülse (16), und ein Rückraum vorgesehen ist zwischen der Außenseite der Röhre und der Innenseite der Gehäusehülse, und

eine Gammastrahlen-Abschirmung einschließlich eines unteren zylindrischen Abschnitts (84), angeordnet innerhalb der Gehäusehülse (16) zwischen dem Kristall und der Quelle, und eines oberen Rückabschirmabschnitts (88), der in dem Rückraum angeordnet ist.

17. Die Vorrichtung nach Anspruch 16, dadurch gekennzeichnet, daß der Rückabschirmabschnitt (88) und der untere zylindrische Abschnitt (84) integral verbunden sind durch einen Verbindungsabschnitt (86) mit einer nach unten abgeschrägten Oberfläche (96) von dem Rückabschirmabschnitt zu dem zylindrischen Abschnitt und zugekehrt der äußeren Längskante, welche Oberfläche unter dem Kristall angeordnet ist.

**18.** Die Vorrichtung nach Anspruch 12, dadurch gekennzeichnet,

daß der nahe Detektor (20) einen zylindrischen Szintillationskristall (72) und eine zylindrische Fotovervielfacherröhre (74) in Anlage aneinander und mit ihren Achsen zueinander ausgefluchtet umfaßt, welcher Kristall zwischen der Quelle und der Röhre angeordnet ist, wobei die Röhre einen Durchmesser aufweist, der kleiner ist als der der Gehäusehülse (16);

daß der Kristall und die Röhre (72, 74) koaxial mit der Gehäusehülse (16) montiert sind derart, daß ein Raum zwischen der Außenseite der Röhre und der Innenseite der Gehäusehülse geschaffen wird; und

daß die Bohrlochempfindlichkeitsverbesserungsmittel eine Gammastrahlen-Abschirmung umfassen mit:

einem unteren zylindrischen Abschnitt (106), angeordnet innerhalb der Gehäusehülse (16) zwischen dem Kristall und der Quelle,

einem oberen Rückabschirmabschnitt (110), der in dem Raum angeordnet ist,

einem Muffenabschnitt (109), verbunden mit dem Rückabschirmabschnitt (110) und sich in Längsrichtung zu einer Position unterhalb des Kristalls (72) erstreckend, welcher Muffenabschnitt in seiner Wandung eine sich in Längsrichtung erstreckende Winkelöffnung (116) aufweist, und

einen Verbindungsabschnitt (108) zwischen dem unteren zylindrischen Abschnitt (106) und dem Muffenabschnitt (109) mit einer nach unten abgeschrägten Oberfläche (114) von dem Boden des Muffenabschnitts (109) zur Oberseite des zylindrischen Abschnitts (106), welche Oberfläche in derselben Richtung zugekehrt ist wie die Winkelöffnung (116) in der Wandung des Muffenabschnitts (109), und welche Oberfläche (114) im wesentlichen unter der Winkelöffnung in der Muffenabschnittwandung und unter dem Kristall (72) angeordnet ist.

**19.** Die Vorrichtung nach Anspruch 18, dadurch gekennzeichnet, daß die Gammastrahlen-Abschirmung ferner einen Deckkappenabschnitt (112) umfaßt, der oberhalb des Rückabschirmabschnitts (110) und oberhalb der Röhre (74) angeordnet ist.,

**20.** Die Vorrichtung nach Anspruch 12, dadurch gekennzeichnet,

daß der nahe Detektor (20) einen zylindrischen Szintillationskristall (72) und eine zylindrische Fotovervielfacherröhre (74) in Anlage aneinander und mit ihren Achsen ausgefluchtet umfaßt, wobei der Kristall zwischen der Quelle und der Röhre angeordnet ist,

wobei der Kristall und die Röhre (72, 74) koaxial mit der Gehäusehülse montiert sind, die Röhre einen Durchmesser aufweist, der kleiner ist als der der Gehäusehülse (16), um so einen Raum zwischen der Außenseite der Röhre und der Innenseite der Gehäusehülse zu schaffen; und

daß die Bohrlochempfindlichkeitsverbesserungsmittel eine Gammastrahlen-Abschirmung umfassen mit:

einem unteren zylindrischen Abschnitt (106), angeordnet innerhalb der Gehäusehülse zwischen dem Kristall (72) und der Quelle (18), und

einem oberen Rückabschirmabschnitt (110), angeordnet in dem rückseitigen Raum, welcher Rückabschirmabschnitt (110) und untere zylindrische Abschnitt (106) voneinander getrennt sind durch einen Längsraum, im wesentlichen entsprechend der Längsplazierung des Kristalls (72).

**21.** Die Vorrichtung nach Anspruch 20, dadurch gekennzeichnet, daß sie ferner einen zylindrischen Deckkappenabschnitt (112) umfaßt, der oberhalb des Rückabschirmabschnitts (110) und oberhalb der Röhre (74) angeordnet ist.

**22.** Die Vorrichtung nach einem der Ansprüche 12 bis 21, dadurch gekennzeichnet, daß sie ferner Bohrlochempfindlichkeitsherabsetzmittel umfaßt für das Absenken der Empfindlichkeit des fernen Gammastrahlen-Detektors bezüglich Gammastrahlen, die während der inelastischen Kernreaktionen zwischen den schnellen Neutronen und Materialien in dem Bohrloch und des Bohrlochs erzeugt werden.

**23.** Die Vorrichtung nach Anspruch 22, dadurch gekennzeichnet,

daß der nahe Detektor einen nahen Szintillationskristall (72) und eine nahe Fotovervielfacherröhre (74) umfaßt, der ferne Detektor einen fernen Szintillationskristall (100) und eine ferne Fotovervielfacherröhre (102) umfaßt, und

daß die Bohrlochempfindlichkeitsabsenkmittel eine erste Gammastrahlen-Abschirmung (120, 156) umfassen, angeordnet nahe dem fernen Szintillationskristall (100) um die Außenseite der Gehäusehülse, welche erste Abschirmung (120, 156) sich in Längsrichtung von einer Position unterhalb des fernen Kristalls zu einer Position oberhalb des fernen Kristalls erstreckt, welche Abschirmung transparent ist für Gammastrahlen durch ein Winkelsegment der Peripherie der Gehäusehülse (16) und undurchlässig ist für Gammastrahlen rings um den Rest der Peripherie der Gehäusehülse.

24. Die Vorrichtung nach Anspruch 23, dadurch gekennzeichnet, daß die Bohrlochempfindlichkeitsabsenkmittel ferner umfassen

eine zweite Gammastrahlen undurchlässige Abschirmung (126, 162) mit einer generell zylindrischen Form mit einem Durchmesser, der im wesentlichen der gleiche ist wie ein Innendurchmesser der Gehäusehülse (16), welche zweite Abschirmung (126, 162) zwischen der nahen Fotovervielfacherröhre (74) und dem fernen Kristall (100) angeordnet ist.

25. Die Vorrichtung nach Anspruch 24, dadurch gekennzeichnet, daß die erste Abschirmung (120) sich in Längsrichtung von einer Position unterhalb der zweiten Abschirmung (126) zu einer Position oberhalb des fernen Kristalls (100) erstreckt.

26. Die Vorrichtung nach einem der Ansprüche 12 bis 25, dadurch gekennzeichnet, daß sie ferner Mittel umfaßt für die Herabsetzung des Effekts von Magnetfeldern in dem Bohrloch auf die Detektoren.

27. Die Vorrichtung nach Anspruch 26, dadurch gekennzeichnet, daß die Herabsetzmittel einen ersten Zylinder aus magnetisch hoch permeablem Material umfassen, der jeden Detektor einschließt.

28. Die Vorrichtung nach Anspruch 27, dadurch gekennzeichnet, daß die Herabsetzmittel ferner einen zweiten Zylinder hoher magnetischer Sättigung umfassen, der den ersten Zylinder umhüllt.


## Revendications

1. Procédé pour déterminer la saturation en hydrocarbures ($S_0$) d'une formation traversée par un trou de forage, le procédé comprenant les étapes consistant à:

irradier la formation à l'aide d'une impulsion de neutrons rapides provenant d'une source (18) placée dans le trou de forage;

détecter les signaux d'un spectre de rayons gamma inélastiques au niveau de détecteurs (20,22) proche et éloigné de ladite source, en réponse à des rayons gamma produits pendant des réactions nucléaires inélastiques entre lesdits neutrons rapides et les matériaux se trouvant dans, et constituant le trou de forage et la formation;

produire, à partir dudit détecteur proche (20) un premier signal représentatif des rayons gamma inélastiques émanant du trou de forage et de la formation;

produire, à partir dudit détecteur éloigné (22), un second signal représentatif des rayons gamma inélastiques émanant du trou de forage et de la formation;

comparer ledit premier signal à un spectre inélastique composite constitué des spectres de composantes supposées, pour produire une première estimation des constituants de la formation;

comparer ledit second signal à un spectre inélastique composite constitué des spectres de composantes supposées, pour produire une seconde estimation des constituants de la formation; et

déterminer à partir desdites première et seconde estimées ladite caractéristique de la formation.

2. Procédé selon la revendication 1, comprenant les étapes supplémentaires consistant à

comparer des représentations respectives desdits signaux de spectres de rayons gamma inélastiques proche et éloigné, à des modèles de représentation prédéterminés du trou de forage et de la formation; et

produire une représentation de ladite saturation en hydrocarbures ($S_0$) dans la formation, pratiquement corrigée pour des rayons gamma produits par lesdites réactions nucléaires entre lesdits neutrons rapides et les matériaux se trouvant dans, et constituant le trou de forage.

3. Procédé selon la revendication 2, dans lequel les étapes sont répétées à différentes profondeurs dans le trou de forage et un signal proportionnel à ladite représentation de la saturation en hydrocarbures ($S_0$) dans la formation, est enregistré en fonction de la profondeur dans le trou de forage.

4. Procédé selon la revendication 2, dans lequel un signal ($S_w$) proportionnel à $1-S_0$ est produit et enregistré en fonction de la profondeur dans le trou de forage.

5. Procédé selon l'une quelconque des revendications 2 à 4, comprenant en outre l'étape consistant à déterminer une caractéristique du contenu du trou de forage.

6. Procédé selon la revendication 5, pour déterminer en outre le pourcentage d'hydrocarbures ($C_b$) des matériaux se trouvant dans et constituant le trou de forage, comprenant les étapes supplémentaires consistant à:

comparer des représentations respectives desdits signaux de spectres des rayons gamma inélastiques proche et éloigné à des modèles de représentation prédéterminés du trou de forage et de la formation; et

produire une représentation dudit pourcentage d'hydrocarbures (Cb) pratiquement corrigée des rayons gamma produits par lesdites réactions nucléaires entre lesdits neutrons rapides et la formation.

7. Procédé selon la revendication 5 ou 6, dans lequel lesdites étapes sont répétées à différentes profondeurs dans le trou de forage et un signal proportionnel à ladite représentation dudit pourcentage d'hydrocarbures (Cb) des matériaux se trouvant dans, et constituant le trou de forage, est enregistré en fonction de la profondeur dans le trou de forage.

8. Procédé selon la revendication 1, comprenant l'étape supplémentaire consistant à :

utiliser les représentations des signaux des spectres de rayons gamma pour produire des estimations (Cn/On) des quantités de carbone et d'oxygène mesurées par ledit détecteur proche et des estimations (Cf/Of) des quantités de carbone et d'oxygène mesurées par ledit détecteur éloigné; et

déterminer un rapport carbone-oxygène corrigé des effets du trou de forage pour ladite formation en combinant lesdites quantités suivant une relation prédéterminée.

9. Procédé selon la revendication 8, comprenant en outre l'étape consistant à:

déterminer un rapport carbone-oxygène corrigé des effets de la formation pour ledit trou de forage en combinant lesdites estimations selon une relation prédéterminée.

10. Procédé selon la revendication 9, dans lequel lesdites étapes sont répétées à différentes profondeurs dans le trou de forage et dans lequel ledit rapport carbone-oxygène corrigé des effets du trou de forage est enregistré en fonction de la profondeur dans le trou de forage.

11. Procédé selon l'une quelconque des revendications 1 à 10, comprenant en outre les étapes consistant à:

abriter ledit détecteur proche de façon à ce qu'il soit principalement sensible à des rayons gamma émanant du trou de forage; et

abriter ledit détecteur éloigné de façon à ce qu'il soit principalement sensible à des rayons gamma émanant de la formation.

12. Dispositif de diagraphie d'un puits pour déterminer la saturation en hydrocarbures ($S_0$) d'une formation traversée par un trou de forage, comprenant:

un manchon de logement allongé (16);

une source (18) de neutrons rapides montée dans ledit manchon de logement;

un détecteur proche (20) disposé dans ledit manchon de logement (16) longitudinalement à une première distance de ladite source (18) pour produire des signaux représentatifs de rayons gamma produits pendant des réactions nucléaires inélastiques entre lesdits neutrons et les matériaux entourant ladite source;

caractérisé par:

un détecteur éloigné (22) disposé dans ledit manchon de logement (16) longitudinalement à une seconde distance de ladite source (18), supérieure à ladite première distance, pour produire des signaux représentatifs de rayons gamma produits pendant des réactions nucléaires inélastiques entre lesdits neutrons et lesdits matériaux entourant ladite source;

un moyen (31) sensible auxdits signaux des détecteurs proche et éloigné pour élaborer un signal représentatif de ladite caractéristique de la formation; et

un moyen (80) pour accentuer la sensibilité dudit détecteur de rayons gamma proche (20) à des rayons gamma produits pendant lesdites réactions nucléaires inélastiques entre lesdits neutrons rapides et lesdits matériaux se trouvant dans, et constituant le trou de forage.

13. Dispositif selon la revendication 12, caractérisé en ce que ledit détecteur proche (20) comporte un cristal à scintillations (72) et en ce que ledit moyen d'accentuation comporte un blindage contre les rayons gamma globalement cylindrique (80) placé entre ladite source et ledit cristal à scintillations, ledit blindage ayant une forme tronconique (81) orientée vers ledit cristal.

**14.** Dispositif selon la revendication 13 ou 14, caractérisé en ce que ledit détecteur (20) est recouvert d'un blindage de bore.

**15.** Dispositif selon la revendication 14, caractérisé en ce que ledit détecteur éloigné (22) est recouvert d'un blindage de bore.

**16.** Dispositif selon la revendication 12, caractérisé en ce que:

le détecteur proche (20) comporte un cristal à scintillations cylindrique (72) et un tube photo-multiplicateur cylindrique (74) en butée l'un contre l'autre et dont les axes sont alignés, ledit cristal étant disposé entre ladite source et ledit tube, et ledit tube ayant un diamètre inférieur à celui dudit manchon de logement (16); et

ledit moyen d'accentuation de la sensibilité au trou de forage comporte:

un moyen pour monter ledit cristal et ledit tube (72,74) de manière à ce que l'axe du détecteur soit parallèle audit axe du boitier, mais décalé par rapport à celui-ci, afin qu'un bord longitudinal externe du tube (74) coïncide avec un bord longitudinal interne dudit manchon de logement (16) et qu'un espace arrière soit prévu entre l'extérieur dudit tube et l'intérieur dudit manchon de logement, et

un blindage contre les rayons gamma comportant une partie cylindrique inférieure (84) disposée à l'intérieur dudit manchon de logement (16) entre ledit cristal et ladite source, et une partie du blindage arrière supérieure (88) disposée dans ledit espace arrière.

**17.** Dispositif selon la revendication 16, caractérisé en ce que ladite partie de blindage arrière (88) et ladite partie cylindrique inférieure (84) sont reliées de façon solidaire par une partie de raccordement (86) ayant une surface inclinée vers le bas (96) allant de ladite partie de blindage arrière jusqu'à ladite partie cylindrique et faisant face audit bord longitudinal externe, ladite surface étant disposée sous ledit cristal.

**18.** Dispositif selon la revendication 12, caractérisé en ce que:

ledit détecteur proche (20) comporte un cristal à scintillations cylindrique (72) et un tube photomultiplicateur cylindrique (74) en butée l'un contre l'autre et dont les axes sont alignés, ledit cristal étant disposé entre ladite source et ledit tube, ledit tube ayant un diamètre inférieur à celui dudit manchon de logement (16);

ledit cristal et ledit tube (72,74) sont montés coaxialement avec ledit manchon de logement (16) afin de former un espace entre l'extérieur du tube et l'intérieur dudit manchon de logement; ledit moyen d'accentuation de la sensibilité au trou de forage comporte un blindage contre les rayons gamma, comprenant:

une partie cylindrique inférieure (106) disposée à l'intérieur dudit manchon de logement (16) entre ledit cristal et ladite source,

une partie de blindage arrière supérieure (110) disposée dans ledit espace,

une partie de manchon (109) raccordée à ladite partie de blindage arrière (110) et se prolongeant longitudinalement jusqu'à une position inférieure audit cristal (72), ladite partie de manchon ayant une ouverture angulaire s'étendant longitudinalement (116) dans sa paroi, et

une partie de raccordement (108) entre ladite partie cylindrique inférieure (106) et ladite partie de manchon (109), ayant une surface inclinée vers le bas (114) partant de la base de ladite partie de manchon (109) et allant jusqu'au sommet de ladite partie cylindrique (106), ladite surface étant orientée dans la même direction que ladite ouverture angulaire (116) ménagée dans la paroi de ladite partie de manchon (109), et ladite surface (114) étant disposée sensiblement sous ladite ouverture angulaire dans ladite paroi de partie de manchon et sous ledit cristal (72).

**19.** Dispositif selon la revendication 18, caractérisé en ce que ledit blindage contre les rayons gamma comporte en outre une partie formant capuchon supérieur (112) disposée au dessus de ladite partie de blindage arrière (110) et au dessus dudit tube (74).

**20.** Dispositif selon la revendication 12, caractérisé en ce que:

ledit détecteur proche (20) comporte un cristal à scintillations cylindrique (72) et un tube photo-multiplicateur cylindrique (74) en butée l'un contre l'autre et dont les axes sont alignés, ledit cristal étant disposé entre ladite source et ledit tube;

ledit cristal et ledit tube (72,74) sont montés coaxialement avec ledit manchon de logement, ledit tube ayant un diamètre inférieur à celui dudit manchon de logement (16) de façon à former un espace entre l'extérieur dudit tube et l'intérieur dudit manchon de logement; et

ledit moyen d'accentuation de la sensibilité au trou de forage comporte un blindage contre les rayons gamma comprenant:

une partie cylindrique inférieure (106) disposée à l'intérieur dudit manchon de logement entre ledit cristal (72) et ladite source (18), et

une partie de blindage arrière supérieure (110) disposée dans ledit espace arrière, ladite partie de blindage arrière (110) et ladite partie cylindrique inférieure (106) étant séparées par un espace longitudinal correspondant sensiblement à l'emplacement longitudinal dudit cristal (72).

21. Dispositif selon la revendication 20, caractérisé en ce qu'il comporte en outre une partie formant capuchon supérieur cylindrique (112) disposée au dessus de ladite partie de blindage arrière (110) et au dessus dudit tube (74).

22. Dispositif selon l'une quelconque des revendications 12 à 21, caractérisé par le fait qu'il comprend en outre un moyen d'affaiblissement de la sensibilité au trou de forage pour réduire la sensibilité dudit détecteur de rayons gamma éloigné à des rayons gamma produits pendant lesdites réactions nucléaires inélastiques entre lesdits neutrons rapides et les matériaux se trouvant dans, et constituant le trou de forage.

23. Dispositif selon la revendication 22, caractérisé en ce que:

ledit détecteur proche comporte un cristal à scintillations proche (22) et un tube photomultiplicateur proche (74), ledit détecteur éloigné comporte un cristal à scintillations éloigné (100) et un tube photo-multiplicateur éloigné (102), et

ledit moyen d'affaiblissement de la sensibilité au trou de forage comporte un premier blindage contre les rayons gamma (120, 156) disposé au voisinage dudit cristal à scintillations éloigné (100) autour de l'extérieur dudit manchon de logement, ledit premier blindage (120, 156) se prolongeant longitudinalement d'une position inférieure audit cristal éloigné jusqu'à une position supérieure audit cristal éloigné, ledit blindage étant transparent aux rayons gamma sur tout un segment angulaire de la périphérie dudit manchon de logement (16) et étant opaque aux rayons gamma sur le reste de la périphérie dudit manchon de logement.

24. Dispositif selon la revendication 23, caractérisé en ce que ledit moyen d'affaiblissement de la sensibilité au trou de forage comporte en outre:

un second blindage opaque aux rayons gamma (126, 162) de forme globalement cylindrique ayant un diamètre sensiblement identique à un diamètre interne dudit manchon de logement (16), ledit second blindage (126, 162) étant disposé entre ledit tube photomultiplicateur proche (74) et ledit cristal éloigné (100).

25. Dispositif selon la revendication 24, caractérisé en ce que ledit premier blindage (120) se prolonge longitudinalement d'une position inférieure audit second blindage (26) jusqu'à une position supérieure audit cristal éloigné (100).

26. Dispositif selon l'une quelconque des revendications 12 à 25, caractérisé par le fait qu'il comprend en outre un moyen pour réduire les effets des champs magnétiques présents dans le trou de forage sur lesdits détecteurs.

27. Dispositif selon la revendication 26, caractérisé en ce que ledit moyen d'affaiblissement comporte un premier cylindre constitué d'un matériau à haute perméabilité magnétique enveloppant chaque détecteur.

28. Dispositif selon la revendication 27, caractérisé en ce que ledit moyen d'affaiblissement comporte en outre un second cylindre à haute saturation magnétique enveloppant ledit premier cylindre.

*FIG.1*

FIG.2

FIG.3

FIG.4

FIG.5

EP 0 348 260 B1

*FIG. 6*

CONDITION SELECTION, n

FOR EACH DEPTH X

$g_n(E_K)$

$g_f(E_K)$

**COMPUTER**

(1.) DETERMINE $\frac{C_n}{O_n}$ AND $\frac{C_f}{O_f}$ FROM LEAST SQUARES ANALYSIS OF $g(E_K)_n$ AND $f_{in}(E_K)$

(2.) DETERMINE $S_o$ AND $C_b$ FROM $\frac{C_n}{O_n}$ AND $\frac{C_f}{O_f}$ AND $\alpha_n, \beta_n \dots \alpha_f, \beta_f \dots \mu_f, \upsilon_f$

(3.) DETERMINE $S_w$
$S_w = 1 - S_o$

**CONDITION TABLES**

(1.)
| $f_{1n}(E_K)$ |
| $f_{1f}(E_K)$ |
| $\alpha_n, \beta_n, \delta_n,$ $\eta_n, \mu_n, \upsilon_n,$ |
| $\alpha_f, \beta_f, \delta_f,$ $\eta_f, \mu_f, \upsilon_f,$ |

(2.)

(N.)

$S_o(X), C_b(X), S_w(X)$

**RECORDER**

$S_o$    $C_b$    $S_w$      X

23

FIG. 7

EP 0 348 260 B1

FIG.9A

FIG.9B

FIG.8

25

FIG.10A

FIG.11

FIG.10B

26

## FIG.12A

## FIG.13A

102
100
12B    12B
122    126
120
74
72
80
16
18
13
12
8

142
156
102
100    13
13B    13B
160
162    162'
140
74
72    152
148
13C    13C
150    146
16    8
12    18

## FIG.13B

156    100
16    102

## FIG.12B

120    100
16    124
122

150    72
16    152

## FIG.13C